# EUROPÄISCHE PATENTANMELDUNG

(11) **EP 3 566 567 A2**
(43) Veröffentlichungstag der Anmeldung: **13.11.2019**
(21) Anmeldenummer: 19000211.3
(22) Anmeldetag: 02.05.2019
(51) Int. Cl.: A01D 57/01, A01D 61/00

(54) **EINZUGSWALZE FÜR EINE ERNTEMASCHINE**

(30) Priorität: 03.05.2018 DE 102018003555
(71) Anmelder: Maschinenfabrik Bernard Krone GmbH & Co. KG, 48480 Spelle (DE)
(72) Erfinder: Ensink, Holger, 49835 Wietmarschen (DE); Spree, Christian, 49584 Fürstenau (DE)

(57) **Zusammenfassung**

Einzugswalze für eine Erntemaschine (1), wobei zumindest zwei parallel zueinander orientierte, gegensinnig antreibbare Einzugswalzen (11) einen Einzugszusammenbau (6) bilden, zwischen denen ein Erntegutstrom der Erntemaschine (1) zur Weiterverarbeitung zugeführt wird, wobei zumindest eine Einzugswalze (11) des Einzugszusammenbaus (6) einen einteiligen Walzenmantel (14) umfasst, der im Querschnitt (19) ein Rohrprofil mit variierender Wandungsstärke aufweist, welches mit, am Umfang verteilten, radial nach außen gerichteten Längsstegen (20) versehen ist.

## Beschreibung

Die Erfindung betrifft eine Einzugswalze für eine Erntemaschine, wobei zumindest zwei parallel zueinander orientierte, gegensinnig antreibbare Einzugswalzen einen Einzugszusammenbau bilden, zwischen denen ein Erntegutstrom der Erntemaschine zur Weiterverarbeitung zugeführt wird.

Derartige Einzugsvorrichtungen sind insbesondere aus dem Bereich der Feldhäcksler bekannt. Feldhäcksler dienen zur Ernte von landwirtschaftlich angebauten Pflanzen, die mittels eines Erntevorsatzes vom Erdboden aufgenommen oder abgeschnitten und zusammengeführt werden. Durch eine rückwärtige Übergabeöffnung des Erntevorsatzes wird das Erntegut dann von einer Einzugsvorrichtung des Feldhäckslers übernommen. Üblicherweise fördern dann die mindestens zwei Walzenpaare unter Vorspannung der oberen und unteren Walzen zueinander gleichmäßig einer Häckseltrommel zu, wobei es unter dem Vorspanndruck für ein gutes Schnittergebnis vorverdichtet wird.

Um Schäden an Förder- und Häckseleinrichtungen und Verletzungen der Tiere durch die Verfütterung von mit metallischen Teilen verunreinigtem Futter zu vermeiden, sind insbesondere Feldhäcksler im Erntegut Einzugsbereich mit Metallortungseinrichtungen ausgerüstet, welche ferromagnetische Fremdkörper möglichst frühzeitig im Erntegutfluss erkennen sollen. Dazu sind die so genannten Metalldetektoren üblicherweise derart angeordnet, dass sie den Bereich kurz vor, beziehungsweise zwischen dem ersten, von zumeist zwei oder drei Einzugswalzenpaaren überwachen. Rotierende und je nach Menge des eingezogenen Erntegutes linear im Abstand zueinander bewegliche Einzugswalzen in diesem Erfassungsbereich erzeugen Störsignale und erschweren die Überwachung wenn sie aus magnetisierbarem Metall gefertigt sind, oder auch nur Teile daraus enthalten.

Aus dem Stand der Technik sind daher verschiedene Ausführungen von Einzugswalzen bekannt, die aus nicht magnetisierbarem Material hergestellt sind. So sind Walzen als komplette Schweißkonstruktion aus rostfreiem Stahl bekannt, die jedoch nachteilig durch die aufwändige Schweißarbeit und Nacharbeit auf Grund von Schweißverzug sehr arbeitsintensiv und somit kostenintensiv in der Herstellung sind. Außerdem ist ein angestrebtes möglichst geringes Gewicht durch diese Fertigungsart nicht zu realisieren, da die Schweißverbindung der Einzelteile den zumindest teilweisen Einsatz von Leichtbaumaterialien in weniger beanspruchten Bereichen nicht zulässt. Des Weiteren ist ein Austausch verschlissener Einzelteile ebenso nachteilig nicht möglich.

Eine weitere Ausführungsform einer Einzugswalze ist aus der Patentschrift DE 10 2013 200 183 B3 bekannt. Bei dieser, aus einer Vielzahl von Einzelteilen montierten Einzugswalze, lässt sich das Gewicht insbesondere durch den aufwändigen Aufbau des Walzenmantels aus leichten Profilsegmenten reduzieren. Dafür muss jedoch ein erheblicher Montageaufwand der Segmente mit den daraus resultierenden Ungenauigkeiten und eine kaum zu garantierende Dichtheit gegen Erntegutsäfte in Kauf genommen werden.

Die Aufgabe der Erfindung ist es, eine Einzugswalze bereit zu stellen, die die genannten Nachteile des Standes der Technik vermeidet und sich dabei zusätzlich durch niedrige Herstellungskosten und hoher Wartungsfreundlichkeit auszeichnet.

Diese Aufgabe wird erfindungsgemäß durch die kennzeichnenden Merkmale des Patentanspruchs 1 gelöst, wobei in den weiteren Patentansprüchen Merkmale aufgeführt sind, die die Lösung in vorteilhafter Weise weiterentwickeln.

Eine erfindungsgemäße Einzugswalze umfasst einen einteiligen Walzenmantel aus möglichst leichtem Material, wobei der Querschnitt quer zur Längserstreckung der Walze ein Rohrprofil mit variierender Wandstärke darstellt, welches mit am Umfang verteilten, radial nach außen gerichteten Längsstegen versehen ist.

Diese Längsstege dienen der Erfassung und Förderung des Ernteguts und werden bei der Fertigung des einteiligen Rohrprofils gleich mit angeformt. Um einen frühzeitigen Verschleiß der Stege vorzubeugen, werden sie vorteilhaft mit Förderleisten aus höherwertigem, verschleißfestem Material austauschbar versehen.

Gemäß einer vorteilhaften Ausführung der Förderleisten sind diese derart ausgeführt, dass ihre Längsseiten unterschiedliche Profile aufweisen. So kann durch einfaches Wenden der Förderleisten die Förderwirkung der Einzugswalze verschiedenen Emtegütern angepasst werden.

Da der Walzenmantel der Einzugswalze als größtes Bauteil der mehrteiligen Einzugswalze möglichst leicht, aber für die Belastungen ausreichend dimensioniert sein muss, weist das Profil erfindungsgemäß eine weitere Besonderheit auf. Die nach innen zur Längsmittelachse der Einzugswalze gerichtete Wandung des Rohrprofils ist nicht kreisrund. Jeweils gegenüber den nach außen gerichteten Längsstegen ist die Wandung radial nach innen weisend, asymmetrisch verstärkt.

Entsprechend den Kräften und Biegemomenten, die von den Längsstegen im Erntebetrieb auf den Walzenmantel wirken ist die asymmetrische Verstärkung der Drehrichtung und damit der Kräfteeinwirkung angepasst.

Eine besonders vorteilhafte Weiterbildung der Erfindung sieht vor, den Förderraum zwischen den Längsstegen möglichst groß auszubilden. Die konstruktive Gestaltung des Rohrprofils bietet dazu gegenüber einem Walzenmantel aus einfachem Rundrohr viele Möglichkeiten. So kann das Fördervolumen der Einzugswalze durch eine konkave Form des Walzenmantels in diesem Bereich erheblich vergrößert werden.

Durch die, in mehrfacher Hinsicht optimierte Profilform des Walzenmantels lässt sich das Gewicht der Einzugswalze bei vergleichbarer Stabilität gegenüber bekannten Konstruktionen wesentlich reduzieren.

Besonders vorteilhaft und wirtschaftlich ist das Rohrprofil des Walzenmantels aus Aluminium im Strangpressverfahren zu fertigen. Andere Materialien wie beispielsweise Kunststoff und Fertigungsverfahren wie beispielsweise Gießverfahren, sind jedoch auch denkbar.

Durch die hohe Formgenauigkeit des Strangpressverfahrens können nachfolgende spanende Bearbeitungen sehr gering gehalten werden. Sie dienen ausschließlich der passgenauen Schraubverbindung mit den weiteren Bauteilen der Einzugswalze, wie Endflansche und Förderleisten. Somit sind diese Bauteile mit minimalem Montageaufwand aus beliebigen, den Belastungen und dem Verschleiß angepassten Materialien kombinierbar. Eine Abdichtung der Einzugswalze gegen eindringende Flüssigkeiten ist nur zwischen dem Walzenmantel und den Endflanschen notwendig und somit sehr einfach mit geringem Aufwand auszuführen.

Weitere Vorteile und Einzelheiten der Erfindung ergeben sich aus der nachfolgenden Beschreibung unter Hinweis auf die beigefügten Figuren einer bevorzugten Ausführungsform der Erfindung. Es zeigt:
**Fig. 1** eine Seitenansicht eines selbstfahrenden Feldhäckslers als Ausführungsbeispiel einer, einen Einzugszusammenbau mit einer erfindungsgemäßen Einzugswalze umfassenden Erntemaschine,
**Fig. 2** eine teilweise geschnittene, schematische Detaildarstellung eines den Einzugszusammenbau einschließenden Bereiches des Feldhäckslers,
**Fig. 3** eine perspektivische Ansicht der oberen, vorderen Einzugswalze,
**Fig. 4** eine Explosionsansicht der oberen, vorderen Einzugswalze,
**Fig. 5** eine perspektivische Ansicht des Walzenmantels der oberen, vorderen Einzugswalze.

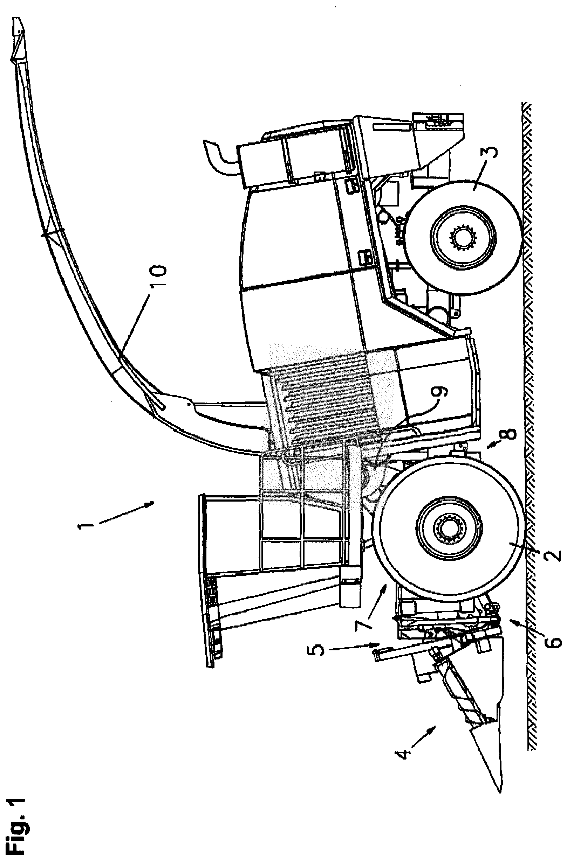

Der in Fig. 1 dargestellte selbstfahrende, sich über Antriebs- und über Lenkräder 2, 3 auf dem Boden abstützende Feldhäcksler 1 ist eine Erntemaschine zum Aufnehmen und Häckseln von Erntegut wie Mais, Grüngut oder dergleichen. Für den jeweiligen Erntevorgang trägt der Feldhäcksler 1 frontseitig ein Vorsatzgerät 4, beispielsweise ein Maisgebiss, das an einer Adaptervorrichtung 5 angebracht ist, an die sich ein Einzugszusammenbau 6 mit nachfolgender Häckseleinrichtung 7 anschließt. Aus der Häckseleinrichtung 7 gelangt das Häckselgut durch einen Übergangsschacht zu einem Corn-Cracker 8, wonach es durch ein Wurfgebläse 9 über einen Auswurfkrümmer 10 ausgeworfen wird.

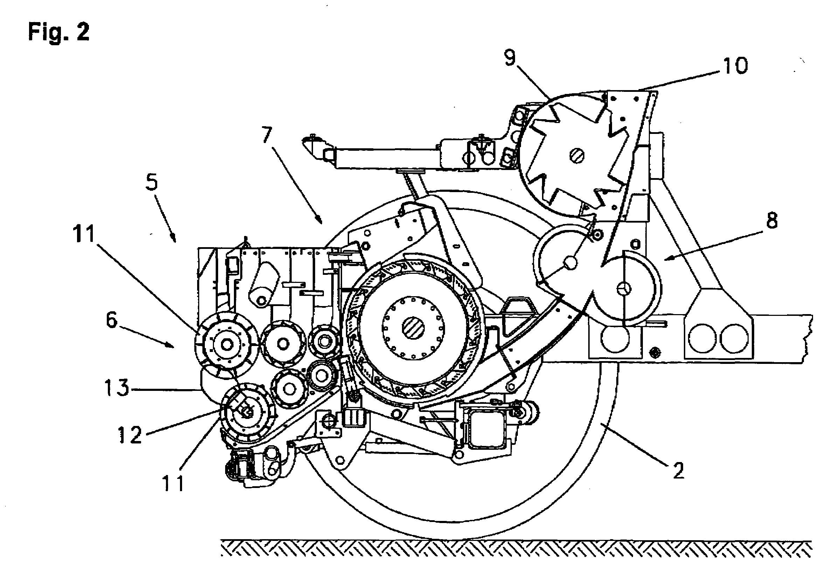

In Fig. 2 ist der Bereich des Einzugszusammenbaus 6 mit den anschließenden Aggregaten im Gutfluss im Detail dargestellt.

Am Anfang des Einzugszusammenbaus 6 ist die untere Einzugswalze 11 des ersten Einzugswalzenpaares mit einer Metalldetektionseinrichtung 12 derart ausgerüstet, dass der Überwachungsbereich 13 den gesamten Einführungsbereich zwischen den Einzugswalzen 11 des ersten Walzenpaares in Richtung des Vorsatzgerätes 4 hin ausgerichtet abdeckt. Diese Ausrichtung des Überwachungsbereichs ist besonders vorteilhaft, weil dadurch auch bei schnelleren Zuführgeschwindigkeiten des Ernteguts noch eine sichere Metallerkennung mit anschließender Betätigung von Sicherheitseinrichtungen gegeben ist. Da sich bewegende, magnetisierbare Metalle im Überwachungsbereich 13 als Fremdkörper erkannt werden, beziehungsweise Störsignale hervorrufen, kann man der Fig. 2 gut entnehmen, dass die Einzugswalzen 11 des ersten Walzenpaares aus einem nicht magnetisierbaren Material bestehen müssen, um Ungenauigkeiten bei der Metalldetektion zu vermeiden. Die Einzugswalzen der weiteren Walzenpaare im Gutfluss sind davon nicht betroffen, da sie außerhalb des Überwachungsbereichs 13 liegen.

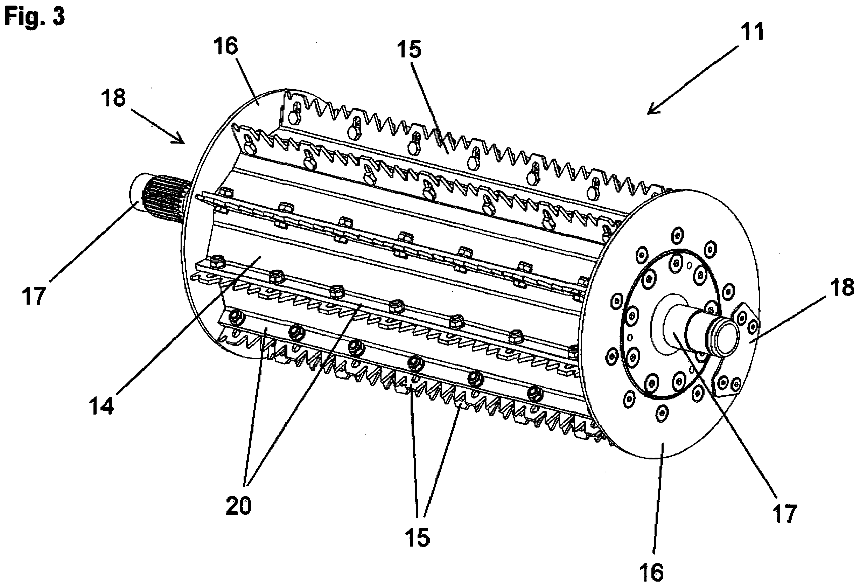

Die in den Fig. 3 bis 5 gezeigte obere Einzugswalze 11 des ersten Walzenpaares stellt nur ein Ausführungsbeispiel für eine erfindungsgemäße Einzugswalze 11 dar. Alle weiteren Einzugswalzen können ebenso erfindungsgemäß ausgeführt sein.

Fig. 3 zeigt die aus den Einzelteilen Walzenmantel 14 mit Förderleisten 15, Endflansche 16 und Lagerzapfen 17 montierte Einzugswalze 11. Außerdem sind noch die, endseitig jeweils auf die Endflansche geschraubten Räumelemente 18 dargestellt.

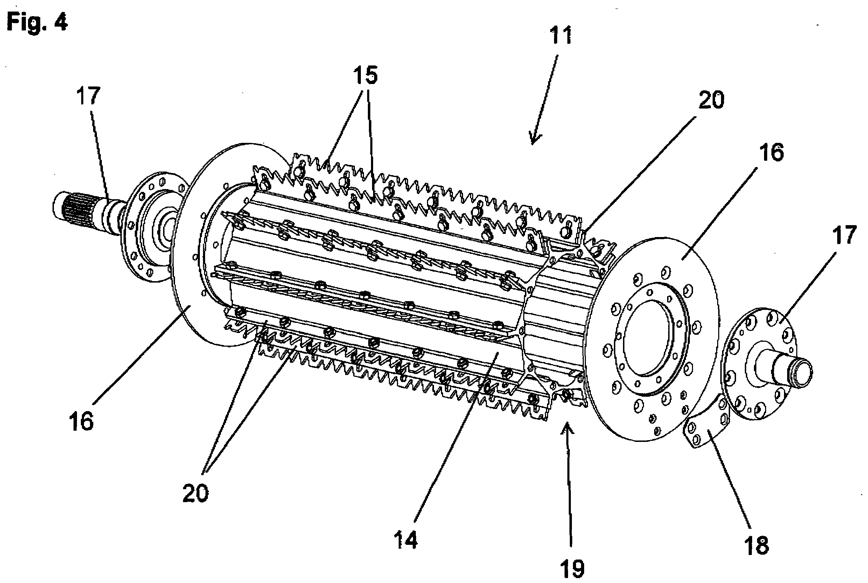

Fig. 4 zeigt die Einzugswalze 11 in einer demontierten Explosionsdarstellung ohne Schrauben als Verbindungsmittel. An den noch montierten Förderleisten 15 ist deutlich zu erkennen, dass sie eine aggressive, gezackte Längsseite und eine gegenüberliegende, glatte Längsseite aufweisen. Je nach gewünschter Förderleistung und Einwirkung auf das Erntegut, kann durch einfaches Wenden der Leisten 15 die Einzugswalze 11 entsprechend angepasst werden. Für die Langlöcher der Förderleisten 15 könnten auch jeweils zwei Einzelbohrungen für die zwei Einbaustellungen eingebracht werden.

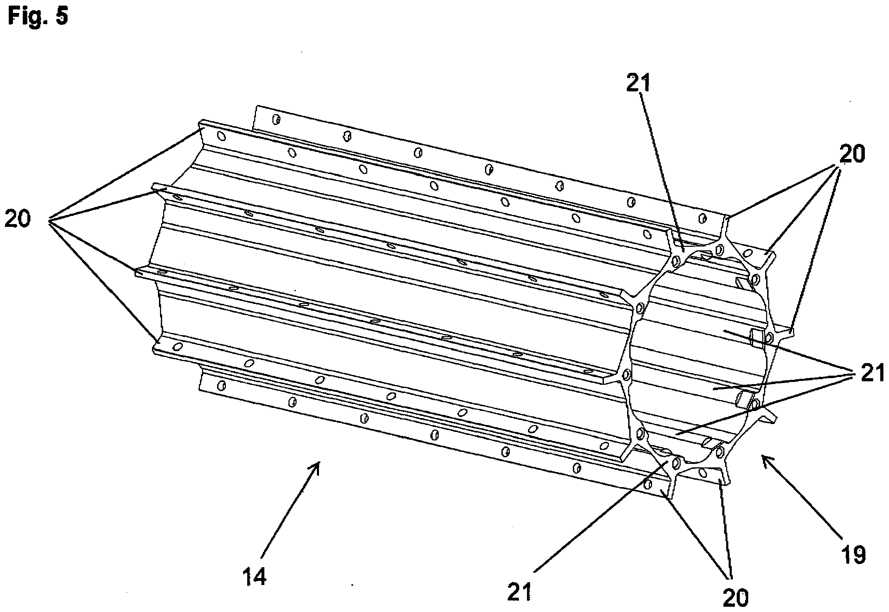

Ebenfalls der Fig. 4 gut zu entnehmen ist, wie durch einfache zentrische Drehbearbeitung der Einzelteile 16, 17 mit entsprechenden Zentrieransätzen und minimale stirnseitige Bearbeitung des Walzenmantels 14 eine einfache, aber sehr genaue Montage der Einzugswalze 11 erfolgen kann. Den Walzenmantel 14 als Hauptbauteil der Einzugswalze 11 nach der Erfindung zeigt Fig. 5 deutlich im Detail in perspektivischer Ansicht. Die bereits erfolgte Bearbeitung durch Bohren von Befestigungsbohrungen und jeweiliges Andrehen eines Zentrieransatzes mit Planfläche für die Endflansche 16 macht den vorteilhaft geringen Bearbeitungsaufwand deutlich. Durch die hohe Genauigkeit, des in bevorzugter Ausführung im Strangpressverfahren hergestellten Profilrohres des Walzenmantels 14, ist eine hohe Rundlaufgenauigkeit ohne weitere Bearbeitung sichergestellt und so eine besonders wirtschaftliche Fertigung der Einzugswalze 11 durch die Erfindung gegeben.

An dem gut sichtbaren stirnseitigen Querschnitt 19 des Walzenmantels 14 ist das markante Profil des Profilrohres zu erkennen. Deutlich fallen dabei die nach außen gerichteten Längsstege 20 und die nach innen, zum Rohrmittelpunkt vorstehenden Materialanhäufungen in der Wandung des Walzenmantels 14 auf. Diese Walzenmantelverstärkungen 21 befinden sich dabei jeweils im Bereich der nach außen gerichteten Längsstege 20, wobei sie jedoch unsymmetrisch zu diesen gleichmäßig auftreten.

Die für die Erntegutförderung der Einzugswalze 14 notwendigen Kräfte, werden größtenteils vom Walzenmantel 14 über die Längsstege 20 auf das Erntegut übertragen. Dabei wirken diese am Übergang vom Walzenmantel 14 zu den Längsstegen 20 als Moment. Um diese unsymmetrische Kräfteverteilung im Bereich der Längsstege 20 sicher vom Walzenmantel 14 übertragen zu können, muss bei einer Einzugswalze in üblicher Schweißkonstruktion der Walzenmantel eine durchgängige sehr große Wandstärke haben um die Kräfte übertragen zu können. Hohes Gewicht, damit verbunden hohe Kosten und das Risiko von Materialschäden durch Spannungsspitzen sind nachteilig damit verbunden.

All diese Nachteile werden durch die optimierte Profilform des Walzenmantels 14, welcher durch Materialumformung einteilig gefertigt ist, vermieden. Die konstruktiv, unter Berücksichtigung aller einfließenden Kräfte entsprechend der Drehrichtung ermittelte Profilform der Walzenmantelverstärkungen 21 bietet bei minimalem Materialeinsatz optimale Betriebssicherheit und Wirtschaftlichkeit.

Weitere Vorteile der erfindungsgemäßen Einzugswalze 11 sind die hohe Flexibilität in der Materialauswahl der Einzelteile. Je nach Einsatzbereich sind die unterschiedlichsten Kombinationen ohne Mehraufwand, für beispielsweise spezielle Schweißverfahren, durch die Schraubverbindung der Einzelteile 14 bis 17 möglich.

## Patentansprüche

1. Einzugswalze für eine Erntemaschine (1), wobei zumindest zwei parallel zueinander orientierte, gegensinnig antreibbare Einzugswalzen (11) einen Einzugszusammenbau (6) bilden, zwischen denen ein Erntegutstrom der Erntemaschine (1) zur Weiterverarbeitung zugeführt wird, **dadurch gekennzeichnet, dass** zumindest eine Einzugswalze (11) des Einzugszusammenbaus (6) einen einteiligen Walzenmantel (14) umfasst, der im Querschnitt (19) ein Rohrprofil mit variierender Wandungsstärke aufweist, welches mit, am Umfang verteilten, radial nach außen gerichteten Längsstegen (20) versehen ist.

2. Einzugswalze (11) nach Anspruch 1, **dadurch gekennzeichnet, dass** der Walzenmantel (14) im Bereich der Längsstege (20) Walzenmantelverstärkungen (21) durch Materialanhäufungen aufweist.

3. Einzugswalze (11) nach Anspruch 1 oder 2, **dadurch gekennzeichnet, dass** der Walzenmantel (14) der Einzugswalze (11) entsprechend der angenommenen Belastungen ein gewichtsoptimiertes und festigkeitsoptimiertes Profil im Querschnitt (19) aufweist.

4. Einzugswalze (11) nach zumindest einem der vorhergehenden Ansprüche, **dadurch gekennzeichnet, dass** das Profil des Walzenmantels (14) im Bereich der Längsstege (20), entsprechend der Drehrichtung der Einzugswalze (11) im Erntebetrieb und der damit auf den Walzenmantel (20) wirken Kräfte, unsymmetrisch ausgebildet ist.

5. Einzugswalze (11) nach zumindest einem der vorhergehenden Ansprüche, **dadurch gekennzeichnet, dass** das Rohrprofil des Walzenmantels (14) im Strangpressverfahren hergestellt ist.

6. Einzugswalze (11) nach zumindest einem der vorhergehenden Ansprüche, **dadurch gekennzeichnet, dass** der Walzenmantel (14) der Einzugswalze (11) aus Aluminium besteht.

7. Einzugswalze (11) nach zumindest einem der vorhergehenden Ansprüche, **dadurch gekennzeichnet, dass** die Einzelteile (14-17) der Einzugswalze (11) aus verschiedenen Materialien mit unterschiedlichen Verschleißfestigkeiten bestehenden.

8. Einzugswalze (11) nach zumindest einem der vorhergehenden Ansprüche, **dadurch gekennzeichnet, dass** die Einzelteile (14-17) der Einzugswalze (11) lösbar und somit austauschbar miteinander verbunden sind.

9. Einzugswalze (11) nach zumindest einem der vorhergehenden Ansprüche, **dadurch gekennzeichnet, dass** die Einzugswalze (11) einem Einzugszusammenbau (6) zugeordnet ist, der eine Metalldetektionseinrichtung (12) zur Erkennung von ferromagnetischen Fremdkörpern in einem Überwachungsbereich (13) des Erntegutstroms aufweist und die Einzugswalze (11) im Überwachungsbereich (13) der Metalldetektionseinrichtung (12) angeordnet ist.

10. Einzugswalze (11) nach zumindest einem der vorhergehenden Ansprüche, **dadurch gekennzeichnet, dass** die Einzelteile (14-17) der Einzugswalze (11) aus unterschiedlichen nicht magnetisierbaren Materialien bestehen.
